# FASCICULE DE BREVET EUROPEEN

(11) **EP 0 978 305 B1**
(45) Date de publication et mention de la délivrance du brevet: **18.01.2006**
(21) Numéro de dépôt: 99401929.7
(22) Date de dépôt: 28.07.1999
(51) Int. Cl.: B01D 53/047

(54) **Procédé de séparation par adsorption modulée en pression d'un melange de gaz**
Verfahren zur Trennung von Gasgemischen mittels Druckwechseladsorption
Pressure swing adsorption process for separating a gas mixture

(30) Priorité: 04.08.1998 FR 9809998
(43) Date de publication de la demande: 09.02.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR); Engler, Yves, 94300 Vincennes (FR); De Souza, Guillaume, 92130 Issy les Moulineaux (FR); Dolle, Pierre Olivier, 75013 Paris (FR)
(74) Mandataire: Le Moenner, Gabriel

(56) Documents cités:
- EP-A- 0 011 872
- EP-A- 0 819 463
- DE-C- 19 506 762
- US-A- 5 441 558

## Description

L'invention est relative à procédé de séparation par adsorption modulée en pression d'un mélange de gaz, dans lequel on met en oeuvre pour le ou chaque adsorbeur, un cycle de modulation de pression comprenant une succession d'étapes qui définissent des phases d'adsorption, de décompression / régénération et de remontée en pression.

L'invention peut être mise en oeuvre avec tous les types de cycles d'adsorption à variation de pression, par exemple aux cycles suivants :
- Les cycles dits VSA (Vacuum Swing Adsorption), dans lesquels l'adsorption s'effectue sensiblement à la pression atmosphérique et la pression minimale du cycle est nettement inférieure à cette pression atmosphérique et typiquement de l'ordre de 250 à 500 mb. Ces cycles sont généralement mis en oeuvre au moyen d'unités à trois adsorbeurs.
- Les cycles transatmosphériques dits MPSA, qui diffèrent des précédents par le fait que l'adsorption s'effectue à une pression nettement supérieure à la pression atmosphérique et typiquement de l'ordre de 1,3 à 2 bars. Ces cycles sont généralement mis en oeuvre au moyen d'unités à deux adsorbeurs.
- Les cycles dits PSA (Pressure Swing Adsorption), dans lesquels l'adsorption s'effectue à une pression nettement supérieure à la pression atmosphérique, typiquement de l'ordre de 3 à 50 bars, tandis que la pression minimale du cycle est sensiblement égale soit à la pression atmosphérique, soit à une pression de quelques bars.

Dans la suite, on se référera à cette dernière application et on utilisera l'acronyme PSA comme désignation générique de l'ensemble de ces cycles. Par ailleurs, les pressions indiquées sont des pressions absolues.

Par l'expression "adsorption modulée en pression", ou encore PSA (Pressure Swing Adsorption), on entend ici les différents cycles qui ont été proposés pour produire par exemple de l'hydrogène à partir d'un gaz de synthèse de reformage à la vapeur par adsorption sélective sensiblement isotherme, avec la pression de chaque adsorbeur variant entre une haute pression et une basse pression. La haute pression du cycle peut être supérieure ou égale à la pression atmosphérique, tandis que la basse pression du cycle peut être égale ou inférieure à la pression atmosphérique. Ces procédés comportent différentes combinaisons d'étapes d'adsorption, de décompression / régénération et de recompression des adsorbeurs.

De plus, dans ce qui suit, les termes « entrée » et « sortie » désignent les extrémités d'entrée et de sortie d'un adsorbeur en phase d'adsorption ; l'expression « co-courant » désigne le sens de circulation du gaz dans l'adsorbeur pendant cette phase d'adsorption, et l'expression « contre-courant » désigne le sens inverse de circulation.

Les installations dites PSA, c'est à dire les installations permettant de mettre en oeuvre les cycles PSA mentionnés ci-dessus, connaissent un succès croissant notamment dans les domaines de l'épuration d'hydrogène, du traitement du gaz naturel, de la séparation des gaz de l'air, de la récupération de solvants, et du fractionnement de gaz de synthèse.

Ce succès conduit les fabricants d'installations PSA à construire des installations certes plus performantes, mais aussi de plus en plus complexes.

Ceci se traduit par le fait que les installations comprennent une pluralité d'adsorbeurs auxquels sont associées un nombre important de vannes.

Ainsi, par exemple, une installation PSA décrite dans le document US-A- 4 834 780 comprend six adsorbeurs et trente sept vannes, et une autre, décrite dans le document US-A- 4 475 929, comprend dix adsorbeurs et soixante sept vannes.

Le document EP-A- 0 819 463 décrit l'aménagement de temps morts avec isolation d'adsorbeurs pour ajuster la quantité de gaz produit. Ce document n'envisage aucune mesure de pression associée, ni a fortiori de mesure de variation de pression.

Le document US-A- 5 407 465 décrit une installation PSA appareillée avec des capteurs de températures et de pression dans les adsorbeurs pour une surveillance du processus de séparation de mélange gazeux.

Etant donné toutefois que le bon déroulement du cycle dépend des séquences d'ouverture et de fermeture des vannes qui permettent d'obtenir le cycle de pression prévu, on conçoit donc aisément que le dysfonctionnement d'une de ces vannes qui sont manoeuvrées à chaque cycle, peut causer de graves problèmes dans le fonctionnement d'une installation PSA.

A titre d'exemple, il convient de distinguer en particulier deux cas de dysfonctionnement concernant les vannes :
1) un premier dysfonctionnement peut consister en un blocage mécanique de la vanne, résultant en ce que soit la vanne reste fermée malgré une commande d'ouverture imposée (ou l'inverse), soit elle ne s'ouvre ou ferme que très lentement.
   De tels incidents peuvent être détectés par des capteurs de fin de course installés au niveau des vannes et éventuellement liés à des temporisations.
   De plus, étant donné que ce type de dysfonctionnement cause généralement d'importants déséquilibres dans le cycle de pressions des différents adsorbeurs, un tel incident est relativement facile à identifier.
2) Un second dysfonctionnement peut résulter d'un défaut d'étanchéité d'une vanne fermée, ce qui conduit à des fuites internes soit entre adsorbeurs, soit entre un adsorbeur et la ligne de production ou la ligne de résiduaire.

Contrairement au blocage mécanique, les fuites d'une vanne fermée non étanche sont difficiles à déceler sur une unité en fonctionnement.

Elles se traduisent néanmoins par une baisse des performances de l'installation PSA qui sont soit dues à un fonctionnement déséquilibré des adsorbeurs, soit dues directement à une perte de production vers la ligne de gaz résiduaire.

Pour déceler les vannes présentant en position de fermeture un défaut d'étanchéité, on profite classiquement des arrêts périodiques d'entretien de l'installation pour effectuer des tests d'étanchéité.

Mais ces contrôles présentent l'inconvénient qu'ils sont longs et fastidieux. De plus, compte tenu des durées d'arrêt de l'installation, ces contrôles ne peuvent être réalisés qu'à des intervalles de temps espacés.

Or, étant donné que cette perte de production causée par un défaut d'étanchéité d'une vanne et se traduisant par une baisse de quelques % du rendement d'extraction peut durer quelques mois, le manque à gagner peut être important.

L'invention vise à pallier ces divers inconvénients en proposant un procédé permettant de déceler un défaut d'étanchéité d'une vanne au cours d'un cycle de fonctionnement d'une installation PSA.

A cet effet, l'invention a pour objet un procédé de séparation par adsorption modulée en pression d'un mélange de gaz, dans lequel on met en oeuvre pour le ou chaque adsorbeur, un cycle de modulation de pression comprenant une succession d'étapes qui définissent des phases d'adsorption, de décompression/ régénération et de remontée en pression, caractérisé en ce que le cycle comprend en outre au moins temporairement au moins une étape d'isolation de l'adsorbeur pendant laquelle on relève la variation de pression dans l'adsorbeur isolé.

Le procédé selon l'invention peut de plus comporter une ou plusieurs des caractéristiques suivantes :
- l'étape d'isolation est effectuée à une pression intermédiaire entre la pression haute et la pression basse du cycle,
- on compare la variation de pression relevée à un seuil prédéfini, et on émet une alarme lorsque la variation de pression dépasse le seuil prédéfini.
- la durée de l'étape d'isolation est comprise entre 0,5% et 5% de la durée totale du cycle,
- la durée de l'étape d'isolation est supérieure à 5 secondes et de préférence comprise entre 10 et 20 secondes,
- l'étape d'isolation d'un adsorbeur est réalisée entre deux étapes d'équilibrage de pressions entre adsorbeurs,
- ladite étape d'isolation est réalisée après une première étape de décompression à co-courant de l'adsorbeur et avant une étape d'élution, notamment immédiatement après ladite première étape de décompression à co-courant.
- ladite étape d'isolation est réalisée après une première étape de recompression et avant l'étape de recompression finale d'un adsorbeur, notamment immédiatement avant cette dernière,
- la différence entre la pression haute et la pression basse du cycle est supérieure ou égale à 6 bars, de préférence supérieure ou égale à 10 bars.

L'invention a en outre pour objet l'application du procédé tel que défini ci-dessus à la purification d'hydrogène d'un mélange de gaz, notamment d'un mélange comprenant deux ou plusieurs gaz différents du groupe H₂, N₂, CO, CH₄, CO₂, à la purification d'hélium d'un mélange de gaz, notamment un mélange comprenant deux ou plusieurs gaz différents du groupe He, N₂, O₂ et Ar, ou à la séparation d'air.

D'autres caractéristiques et avantages de l'invention ressortiront de la description suivante, donnée à titre d'exemple, sans caractère limitatif, en regard des dessins annexés sur lesquels :
- la Figure 1 représente schématiquement une installation conforme à l'invention;
- la Figure 2 est un diagramme illustrant le procédé de l'invention mis en oeuvre à l'aide de l'installation de la figure 1, et
- la Figure 3 représente schématiquement une variante du procédé selon l'invention.

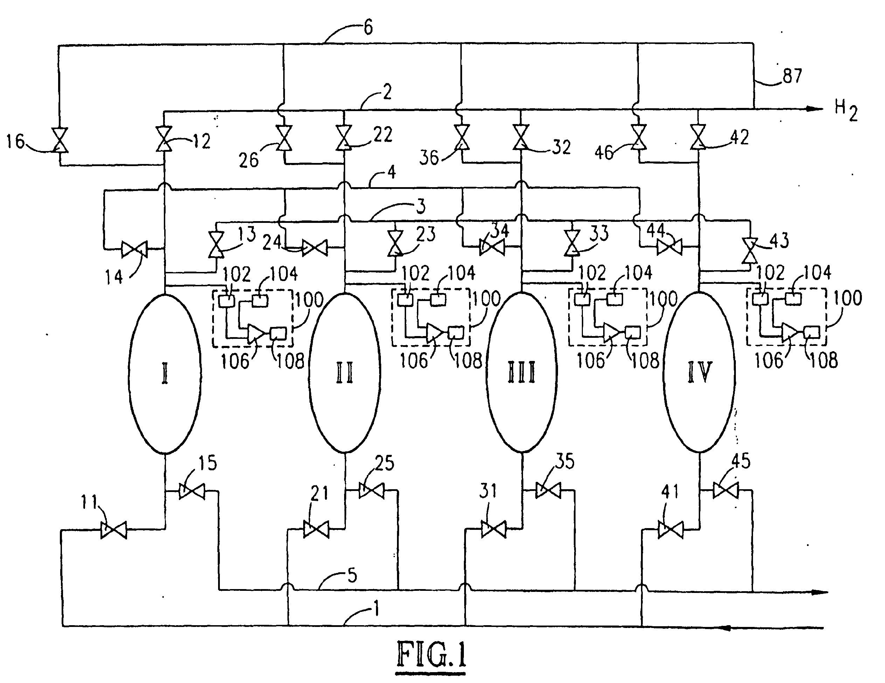

L'installation représentée sur la figure 1 est une unité destinée à produire de l'hydrogène sous une pression relativement élevée, typiquement de l'ordre de 15 à 30 bars.

Cette production s'effectue par adsorption sélective à partir d'un mélange gazeux d'alimentation, au moyen de quatre adsorbeurs portant respectivement les références I, II, III et IV. Le gaz d'alimentation est par exemple un gaz de synthèse de reformage à la vapeur et est acheminé à débit constant par une conduite d'alimentation 1 auquel l'entrée de chaque adsorbeur I à IV est reliée par l'intermédiaire d'une vanne respective de réglage 11, 21,31,41.

La sortie de chaque adsorbeur I à IV est reliée par l'intermédiaire d'une vanne respective de réglage 12, 22, 32 et 42 à une conduite de production 2 de l'hydrogène.

De plus, la sortie de chaque adsorbeur I à IV est reliée d'une part par l'intermédiaire d'une vanne respective de réglage 13, 23, 33 et 43 à une conduite 3 d'équilibrage de pressions entre adsorbeurs, et d'autre part par l'intermédiaire d'une vanne respective de réglage 14, 24, 34 et 44 à une conduite 4 d'élution.

Par «équilibrage de pressions entre adsorbeurs », on entend un transfert de gaz entre adsorbeurs pour équilibrer les pressions régnant dans ces adsorbeurs. Cet équilibrage peut être soit total de sorte qu'à la fin de l'équilibrage, la pression dans les deux adsorbeurs mis en communication est égale, soit partiel de sorte qu'à la fin de l'équilibrage, la pression dans les deux adsorbeurs mis en communication est différente.

L'installation comporte en outre une conduite 5 d'évacuation de gaz résiduaire à laquelle l'entrée de chaque adsorbeur I à IV est reliée par une vanne respective de réglage 15, 25, 35 et 45.

Enfin, l'installation comprend une troisième conduite 6 d'équilibrage de pressions entre adsorbeurs à laquelle la sortie de chaque adsorbeur I à IV est reliée par une vanne respective de réglage 16, 26, 36 et 46. Cette troisième conduite 6 est une conduite de recompression finale. A cet effet, elle est reliée par un embranchement 87 à la conduite de production 2.

En outre, la sortie de chaque adsorbeur I, II, III, IV est reliée à une unité associée de surveillance 100.

Chaque unité de surveillance 100 comprend des moyens 102 de relevé de la variation de pression formés par exemple par un capteur de pression, une mémoire 104 d'un seuil de variation de pression prédéfini, des moyens 106 de comparaison de la variation de pression relevée au seuil mémorisé, et, commandés par les moyens 106 de comparaison, des moyens 108 d'émission d'une alarme lorsque la variation de pression dépasse le seuil mémorisé.

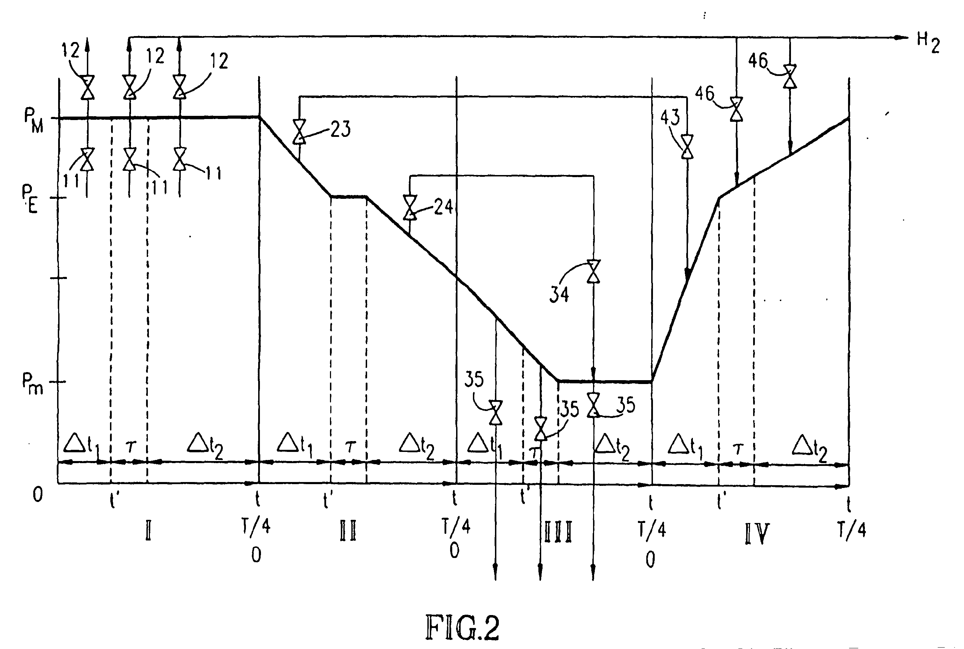

L'installation comporte en outre divers moyens non représentés de commande et de contrôle, bien connus dans la technique, adaptés pour mettre en oeuvre le cycle d'adsorption modulée en pression (Pressure Swing Adsorption ou PSA) illustré sur la Figure 2.

Sur cette Figure 2, où les temps t sont portés en abscisses et les pressions absolues P en ordonnées, les traits orientés par des flèches indiquent les mouvements et destinations des courants gazeux.

Pour chaque adsorbeur I à IV, on a représenté un quart d'un cycle complet, c'est à dire entre t=0 et t = T/4, et les diagrammes pour les adsorbeurs I à IV sont représentés les uns à côté des autres.

Dans cette figure, lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant. Si la flèche dirigée vers le haut est située au-dessous du trait indiquant la pression dans l'adsorbeur, le courant pénètre dans l'adsorbeur par l'extrémité d'entrée de l'adsorbeur ; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter par l'adsorbeur considéré et du gaz soutiré de ce même adsorbeur en phase d'adsorption. Lorsqu'une flèche est dans le sens des ordonnées décroissantes (vers le bas du diagramme), le sens du courant dans l'adsorbeur est à contre-courant. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption.

En outre, on a représenté sur les flèches des symboles de vannes avec leurs numéros de référence. Ces vannes correspondent aux vannes de l'installation de la figure 1. Quand un tel symbole est dessiné sur une flèche, cela signifie que la vanne indiquée est à l'état passant et le gaz s'écoule à travers elle.

Dans l'exemple considéré, la pression haute PM du cycle est de l'ordre de 27 bars, et la pression basse Pm du cycle est voisine de 1,7 bars.

Le temps de phase T/4 est par exemple de 180 s.

Il est à noter que, pour la clarté du dessin, les proportions des pressions n'ont pas été respectées sur la Figure 2.

Pour expliquer les écoulements de gaz dans l'installation ayant lieu en même temps, on décrira le premier quart du cycle complet en référence à l'adsorbeur I, c'est-à-dire entre un instant t= 0 et un instant t = T/4 ou T est la durée d'un cycle complet, le second quart de cycle en référence à l'adsorbeur II, le troisième quart en référence à l'adsorbeur III et le dernier quart de cycle en référence à l'adsorbeur IV. Pour obtenir un cycle complet pour un seul adsorbeur, il faut seulement enchaîner les quarts de cycle des autres adsorbeurs. Par exemple, pour obtenir le cycle complet de l'adsorbeur I, on enchaîne aux étapes du cycle entre 0 et T/4, les étapes de cycle de l'adsorbeur II entre T/4 et T/2, celles de l'adsorbeur III entre T/2 et 3T/4, et celles de l'adsorbeur IV entre 3T/4 et T. Ainsi, on obtient un cycle identique pour tous les adsorbeurs, mais décalé dans le temps de T/4, T/2 et 3T/4 respectivement.

Par ailleurs, chaque quart de cycle est subdivisé en trois périodes d'une durée de respectivement Δt₁ (entre t=0 et t = t'), τ, et Δt₂ (entre t=t'+τ et t=T/4), la somme des trois périodes étant égale à T/4.

### Etapes de cycle pendant Δt₁:

### Adsorbeur I :

Lors de la période Δt₁, la vanne 11 se trouve à l'état passant et l'adsorbeur I est dans une première étape d'adsorption à co-courant, dans laquelle le mélange gazeux à traiter est introduit via la conduite 1 et à l'entrée de l'adsorbeur I au voisinage de la pression PM et circule à co-courant à travers celui-ci. De plus, la vanne 12 est à l'état passant afin que l'hydrogène de production soit soutiré à la sortie de l'adsorbeur I et envoyé dans la conduite de production 2.

### Adsorbeurs II et IV :

Pendant Δt₁, l'adsorbeur II subit une étape de première décompression à co-courant par équilibrage de pressions avec l'adsorbeur IV en phase de première recompression à contre-courant. A cet effet, la vanne 23 est à l'état passant, de sorte que de l'hydrogène soutiré de l'adsorbeur II s'écoule dans la conduite 3, et par l'intermédiaire de la vanne 43, dans l'adsorbeur IV.

Au cours de cette étape, la pression de l'adsorbeur II tombe de PM à une valeur intermédiaire PE, dite pression d'équilibrage. De même la pression de l'adsorbeur IV remonte de Pm à la valeur intermédiaire PE.

### Adsorbeur III :

Pendant Δt₁, l'adsorbeur III subit une étape de décompression à contre-courant, dans laquelle la vanne 35 est à l'état passant et le gaz soutiré de l'entrée de l'adsorbeur III est évacué via la conduite 5.

### Etapes de cycle pendant τ :

### Adsorbeurs I et IV :

Lors de la période τ, l'adsorbeur I se trouve dans une seconde étape d'adsorption à co-courant, qui ne diffère de la précédente lors de Δt₁ que par le fait qu'un débit d'hydrogène prélevé de la conduite de production 2 est envoyé, via la vanne 46 à l'état passant, à contre-courant dans l'adsorbeur IV en étape de recompression finale de PE à PM.

### Adsorbeur II :

Après la première étape de décompression, pendant Δt₁, l'adsorbeur II est pendant un temps τ isolé, c'est-à-dire toutes les vannes 21 à 26 associées à l'adsorbeur II sont à l'état fermé.

Lors de cette étape d'isolation de durée τ, où τ est comprise entre 0,5% et 5% de la durée totale du cycle, on relève la variation de pression dans l'adsorbeur Il et on compare par l'intermédiaire des moyens 106 la variation de pression relevée au seuil prédéfini mémorisé dans la mémoire 104.

Si toutes les vannes 21 à 26 associées à l'adsorbeur II sont étanches à l'état fermé, la variation de pression de l'adsorbeur isolé II est nulle et le diagramme des pressions montre un palier mort.

En revanche, si une ou plusieurs des vannes 21 à 26 associées à l'adsorbeur montre un défaut d'étanchéité, la variation de pression de l'adsorbeur isolé II est non nulle et le diagramme des pressions montre une certaine pente. Si une telle variation de pression relevée dépasse le seuil mémorisé dans la mémoire 104, les moyens 106 commandent aux moyens 108 d'émettre une alarme pour avertir un opérateur chargé de surveiller le fonctionnement de l'installation.

De préférence, la durée de l'étape d'isolement d'un adsorbeur est supérieure à 5 secondes et de préférence comprise entre 10 et 20 secondes.

Etant donné que les adsorbeurs I à IV sont isolés tour à tour au cours d'un cycle de fonctionnement, on peut vérifier l'état d'étanchéité de toutes les vannes de l'installation, ceci sans la nécessité d'un arrêt d'entretien de l'installation PSA.

Cette étape d'isolation pendant un temps τ peut être prévue de manière continue dans un cycle PSA, ou seulement de façon temporaire, par exemple lorsque l'installation PSA est soit en marche nominale, soit en marche réduite.

### Adsorbeur III :

Pendant τ, l'adsorbeur III atteint la pression basse du cycle Pm, la vanne 35 est à l'état passant et le gaz soutiré de l'entrée de l'adsorbeur III est évacué via la conduite 5.

En variante, on prévoit de laisser la vanne 43 à l'état ouvert pendant l'étape d'isolation de durée τ, ce qui permet de vérifier si la vanne 23 présente un défaut d'étanchéité ou non, car la pression dans la conduite 3 est alors supérieure à la presson de l'adsorbeur isolé.

### Etapes de cycle pendant Δt₂:

### Adsorbeurs I et IV:

Lors de la période Δt₂, l'adsorbeur I se trouve dans une troisième étape d'adsorption identique à la précédente lors de τ, c'est-à-dire un débit d'hydrogène prélevé de la conduite de production 2 est envoyé, via la vanne 46 à l'état passant, à contre-courant dans l'adsorbeur IV en étape de recompression finale de PE à PM.

### Adsorbeurs Il et III :

Pendant Δt₂, l'adsorbeur II subit une étape de deuxième décompression à co-courant, dans laquelle le gaz soutiré de sa sortie est envoyé à contre-courant dans l'adsorbeur III en phase d'élution.

A cet effet, la vanne 24 est à l'état passant, de sorte que de l'hydrogène soutiré de l'adsorbeur II s'écoule par l'intermédiaire de la conduite 4 dans l'adsorbeur III, en phase d'élution.

La vanne 35 reste à l'état passant et le gaz soutiré de l'entrée de l'adsorbeur III est évacué via la conduite 5.

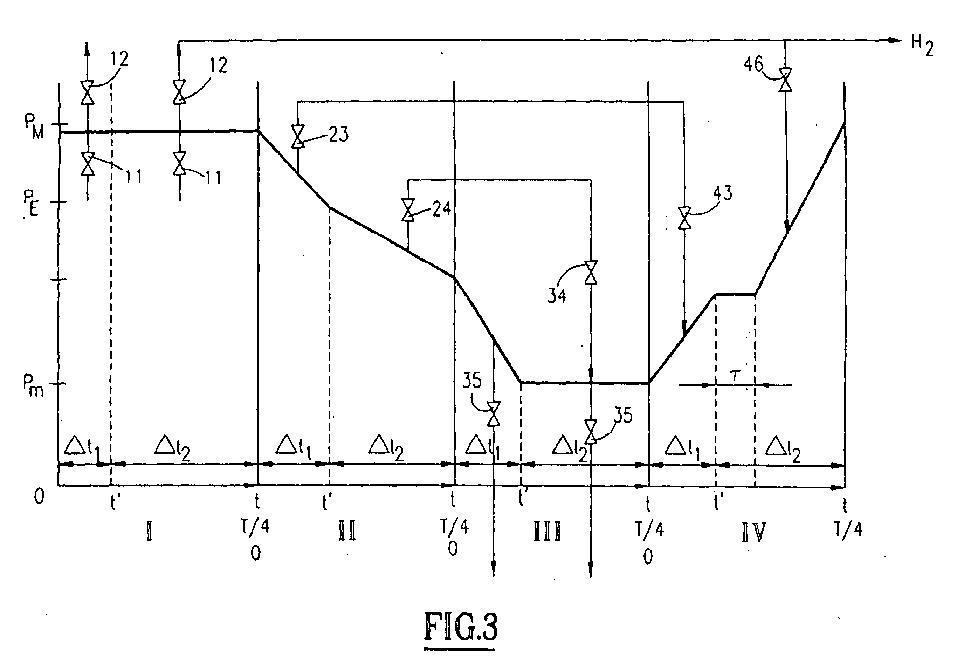

La figure 3 montre une variante du procédé représenté à la figure 2. Cette variante se différencie par le fait que pendant Δt₂, c'est l'adsorbeur IV qui, après une première étape de recompression pendant Δt₁ et avant l'étape de recompression finale, est isolé pour permettre le relevé de variation de pression par les moyens 104 afin de vérifier l'état d'étanchéité des vannes associées 41 à 46. L'étape de recompression finale dure Δt₂ - τ.

Par ailleurs, l'étape d'isolation peut aussi être insérée lors d'une phase où un adsorbeur est à la pression P_{M} où à la pression Pₘ. Toutefois, ceci n'est pas conseillé car dans ce cas, des défauts d'étanchéité respectivement vers les réseaux haute pression et basse pression ne peuvent pas être détectés.

Bien entendu, l'invention s'applique également à des installations comportant un nombre d'adsorbeurs différent de quatre et/ou comportant plus d'une opération d'équilibrage de pressions entre adsorbeurs au cours de la décompression. Elle s'applique également à des installations utilisant par exemple des réservoirs-tampons pour l'équilibrage de pressions entre deux adsorbeurs. Ces réservoirs-tampons peuvent également être équipés de capteurs de pression pour déceler des variations de pression indiquant un défaut d'étanchéité d'une ou de plusieurs vannes lors d'une étape d'isolation.

En outre, le procédé peut aussi bien être appliqué à la purification d'hydrogène avec un cycle PSA présentant une différence entre la haute pression P_{M} et la basse pression Pₘ supérieure à 6 bars, qu'à la purification par exemple d'hélium avec un cycle PSA présentant une différence entre la haute pression P_{M} et la basse pression Pₘ supérieure à 10 bars.

Par ailleurs, le procédé selon l'invention peut aussi être appliqué à la séparation de mélanges de gaz comprenant deux ou plusieurs gaz différents du groupe H₂, N₂, CO, CH₄, CO₂ ou encore de mélanges de gaz comprenant deux ou plusieurs gaz différents du groupe He, N₂, O₂ et Ar.

De plus, en variante, on prévoit d'équiper les conduites 3 et 4 de l'unité PSA de la figure 1 de capteurs de pression permettant de déceler plus facilement les fuites dues à un défaut d'étanchéité d'une vanne.

On note par ailleurs que, pour un adsorbeur de volume donné, la variation de pression due à un défaut d'étanchéité est d'autant plus significative lors d'une étape d'isolation et, par conséquence, l'application du procédé selon l'invention est d'autant plus avantageuse que :
- la durée de l'étape d'isolation est longue,
- la différence de pression entre dans les diverses conduites de l'installation est grande pendant l'étape d'isolation, et/ou
- le ou les constituants principal (principaux) du mélange de gaz sont peu adsorbable(s).

## Revendications

1. Procédé de séparation par adsorption modulée en pression d'un mélange de gaz, dans lequel on met en oeuvre pour le ou chaque adsorbeur, un cycle de modulation de pression comprenant une succession d'étapes qui définissent des phases d'adsorption, de décompression/ régénération et de remontée en pression, **caractérisé en ce que** le cycle comprend en outre au moins temporairement au moins une étape d'isolation de l'adsorbeur (II ; IV) pendant laquelle on relève la variation de pression dans l'adsorbeur isolé.

2. Procédé selon la revendication 1, **caractérisé en ce que** l'étape d'isolation est effectuée à une pression intermédiaire entre la pression haute (PM) et la pression basse (Pm) du cycle.

3. Procédé selon la revendication 1 ou 2, **caractérisé en ce que** l'on compare la variation de pression relevée à un seuil prédéfini, et **en ce que** l'on émet une alarme lorsque la variation de pression dépasse le seuil prédéfini.

4. Procédé selon l'une quelconque des revendications 1 à 3, **caractérisé en ce que** la durée de l'étape d'isolation est comprise entre 0,5% et 5% de la durée totale du cycle.

5. Procédé selon l'une quelconque des revendications 1 à 3, **caractérisé en ce que** la durée de l'étape d'isolation est supérieure à 5 secondes et de préférence comprise entre 10 et 20 secondes.

6. Procédé selon l'une quelconque des revendications 1 à 5, **caractérisé en ce que** l'étape d'isolation d'un adsorbeur (II ; IV) est réalisée entre deux étapes d'équilibrage de pressions entre adsorbeurs (II ; IV).

7. Procédé selon l'une quelconque des revendications 1 à 6, **caractérisé en ce que** ladite étape d'isolation est réalisée après une première étape de décompression à co-courant de l'adsorbeur (II) et avant une étape d'élution, notamment immédiatement après ladite première étape de décompression à co-courant.

8. Procédé selon l'une quelconque des revendications 1 à 6, **caractérisé en ce que** ladite étape d'isolation est réalisée après une première étape de recompression et avant l'étape de recompression finale d'un adsorbeur (IV), notamment immédiatement avant cette dernière.

9. Procédé selon l'une quelconque des revendications 1 à 8, **caractérisé en ce que** la différence entre la pression haute (PM) et la pression basse (Pm) du cycle est supérieure ou égale à 6 bars, de préférence supérieure ou égale à 10 bars.

10. Application du procédé selon l'une quelconque des revendications 1 à 9 à la purification d'hydrogène d'un mélange de gaz, notamment d'un mélange comprenant deux ou plusieurs gaz différents du groupe H₂, N₂, CO, CH₄, CO₂.

11. Application du procédé selon l'une quelconque des revendications 1 à 9 à la purification d'hélium d'un mélange de gaz, notamment un mélange comprenant deux ou plusieurs gaz différents du groupe Hé, N₂, O₂ et Ar.

12. Application du procédé selon l'une quelconque des revendications 1 à 9 à la séparation d'air.

## Patentansprüche

1. Verfahren zum Trennen durch druckmodulierte Adsorption eines Gasgemischs, bei dem man für den oder jeden Adsorber einen Druckmodulationszyklus anwendet, der eine Abfolge von Schritten umfasst, die Phasen des Adsorbierens, des Dekomprimierens/Regenerierens und des Wiederansteigens des Drucks definieren, **dadurch gekennzeichnet, dass** der Zyklus ferner zumindest vorübergehend mindestens einen Schritt des Isolierens des Adsorbers (II; IV) umfasst, während dessen man die Druckschwankung in dem isolierten Adsorber misst.

2. Verfahren nach Anspruch 1, **dadurch gekennzeichnet, dass** der Isolationsschritt bei einem Zwischendruck zwischen dem Hochdruck (PM) und dem Niederdruck (Pm) des Zyklus durchgeführt wird.

3. Verfahren nach Anspruch 1 oder 2, **dadurch gekennzeichnet, dass** man die gemessene Druckschwankung mit einem vorausbestimmten Schwellenwert vergleicht, und **dadurch**, dass man einen Alarm aktiviert, wenn die Druckschwankung den vorausbestimmten Schwellenwert überschreitet.

4. Verfahren nach--einem der Ansprüche 1 bis 3, **dadurch gekennzeichnet, dass** die Dauer des Isolationsschritts zwischen 0,5 % und 5 % der Gesamtdauer des Zyklus beträgt.

5. Verfahren nach einem der Ansprüche 1 bis 3, **dadurch gekennzeichnet, dass** die Dauer des Isolationsschritts größer ist als 5 Sekunden und vorzugsweise zwischen 10 und 20 Sekunden liegt.

6. Verfahren nach einem der Ansprüche 1 bis 5, **dadurch gekennzeichnet, dass** der Schritt des Isolierens eines Adsorbers (II; IV) zwischen zwei Schritten des Ausgleichens der Drücke zwischen Adsorbern (II; IV) durchgeführt wird.

7. Verfahren nach einem der Ansprüche 1 bis 6, **dadurch gekennzeichnet, dass** der Isolationsschritt nach einem ersten Dekompressionsschritt mit Gleichstrom des Adsorbers (II) und vor einem Auswaschschritt durchgeführt wird, insbesondere sofort nach dem ersten Dekompressionsschritt mit Gleichstrom.

8. Verfahren nach einem der Ansprüche 1 bis 6, **dadurch gekennzeichnet, dass** der Isolationsschritt nach einem ersten Wiederkompressionsschritt und vor dem Schritt des abschließenden Wiederkomprimierens eines Adsorbers (IV) durchgeführt wird, insbesondere sofort vor diesem Letzteren.

9. Verfahren nach einem der Ansprüche 1 bis 8, **dadurch gekennzeichnet, dass** der Unterschied zwischen dem Hochdruck (PM) und dem Niederdruck (Pm) des Zyklus größer oder gleich 6 bar, vorzugsweise größer oder gleich 10 bar ist.

10. Anwenden des Verfahrens nach einem der Ansprüche 1 bis 9 auf das Wasserstoffreinigen eines Gasgemisches, insbesondere eines Gemisches, das zwei oder mehrere verschiedene Gase der Gruppe H₂, N₂, CO, CH₄, CO₂ umfasst.

11. Anwenden des Verfahrens nach einem der Ansprüche 1 bis 9 an das Heliumreinigen eines Gasgemisches, insbesondere eines Gemisches, das zwei oder mehrere verschiedene Gase der Gruppe He, N₂, O₂ und Ar umfasst.

12. Anwenden des Verfahrens nach einem der Ansprüche 1 bis 9 an das Luftzerlegen.

## Claims

1. Process for separation of a gas mixture by pressure swing adsorption, in which a pressure swing cycle comprising a sequence of steps which define adsorption, decompression/regeneration and pressure rise phases is employed for the or each adsorber, **characterized in that** the cycle furthermore comprises at least temporarily at least one step of isolating the adsorber (II; IV) during which the pressure variation in the isolated adsorber is recorded.

2. Process according to Claim 1, **characterized in that** the isolation step is carried out at a pressure intermediate between the high pressure (PM) and the low pressure (Pm) of the cycle.

3. Process according to Claim 1 or 2, **characterized in that** the recorded pressure variation is compared with a predefined threshold, and **in that** a warning is emitted when the pressure variation exceeds the predefined threshold.

4. Process according to any one of Claims 1 to 3, **characterized in that** the duration of the isolation step is between 0.5% and 5% of the total duration of the cycle.

5. Process according to any one of Claims 1 to 3, **characterized in that** the duration of the isolation step is more than 5 seconds and preferably between 10 and 20 seconds.

6. Process according to any one of Claims 1 to 5, **characterized in that** the step of isolating an adsorber (II; IV) is carried out between two steps of balancing pressures between adsorbers (II; IV).

7. Process according to any one of Claims 1 to 6, **characterized in that** the isolation step is carried out after a first step of cocurrent decompression of the adsorber (II) and before an elution step, in particular immediately after the said first cocurrent decompression step.

8. Process according to any one of Claims 1 to 6, **characterized in that** the said isolation step is carried out after a first recompression step and before the final recompression step of an adsorber (IV), in particular immediately before the latter.

9. Process according to any one of Claims 1 to 8, **characterized in that** the difference between the high pressure (PM) and the low pressure (Pm) of the cycle is greater than or equal to 6 bar, preferably greater than or equal to 10 bar.

10. Application of the process according to any one of Claims 1 to 9 to the purification of hydrogen in a gas mixture, in particular a mixture comprising two or more different gases in the group H₂, N₂, CO, CH₄, CO₂.

11. Application of the process according to any one of Claims 1 to 9 to the purification of hydrogen in a gas mixture, in particular a mixture comprising two or more different gases in the group He, N₂, O₂ and Ar.

12. Application of the process according to any one of Claims 1 to 9 to the separation of air.
